(19) Europäisches Patentamt / European Patent Office / Office européen des brevets

(11) **EP 4 502 048 B1**

(12) **EUROPEAN PATENT SPECIFICATION**

(45) Date of publication and mention of the grant of the patent:
**22.04.2026 Bulletin 2026/17**

(21) Application number: **23780823.3**

(22) Date of filing: **30.03.2023**

(51) International Patent Classification (IPC):
**C08L 29/04** (2006.01)  **B32B 27/00** (2006.01)
**B32B 27/28** (2006.01)  **B65D 65/40** (2006.01)
**C08K 3/22** (2006.01)

(52) Cooperative Patent Classification (CPC):
(C-Sets available)
**C08J 3/201; B32B 27/00; B32B 27/28; B65D 65/40; C08L 29/04;** C08F 216/06; C08J 2329/04; C08J 2429/04; C08K 2003/2241; C08L 2203/30; C08L 2205/025        (Cont.)

(86) International application number:
**PCT/JP2023/013064**

(87) International publication number:
**WO 2023/190815 (05.10.2023 Gazette 2023/40)**

(54) **ETHYLENE-VINYL ALCOHOL COPOLYMER COMPOSITION, MELT-FORMING MATERIAL, MULTILAYER STRUCTURE, THERMOFORMED CONTAINER, METHOD FOR PRODUCING ETHYLENE-VINYL ALCOHOL COPOLYMER COMPOSITION, AND METHOD FOR PRODUCING MULTILAYER STRUCTURE**

ETHYLEN-VINYLALKOHOL-COPOLYMERZUSAMMENSETZUNG, SCHMELZBILDENDES MATERIAL, MEHRSCHICHTSTRUKTUR, THERMOGEFORMTER BEHÄLTER, VERFAHREN ZUR HERSTELLUNG EINER ETHYLEN-VINYLALKOHOL-COPOLYMERZUSAMMENSETZUNG UND VERFAHREN ZUR HERSTELLUNG EINER MEHRSCHICHTSTRUKTUR

COMPOSITION DE COPOLYMÈRE D'ÉTHYLÈNE-ALCOOL VINYLIQUE, MATÉRIAU DE FORMATION À L'ÉTAT FONDU, STRUCTURE MULTICOUCHE, RÉCIPIENT THERMOFORMÉ, PROCÉDÉ DE PRODUCTION D'UNE COMPOSITION DE COPOLYMÈRE D'ÉTHYLÈNE-ALCOOL VINYLIQUE ET PROCÉDÉ DE PRODUCTION D'UNE STRUCTURE MULTICOUCHE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **30.03.2022 JP 2022057027**

(43) Date of publication of application:
**05.02.2025 Bulletin 2025/06**

(73) Proprietor: **Mitsubishi Chemical Corporation Tokyo 100-8251 (JP)**

(72) Inventor: **OURA, Kohei Tokyo 100-8251 (JP)**

(74) Representative: **Hoffmann Eitle Patent- und Rechtsanwälte PartmbB Arabellastraße 30 81925 München (DE)**

(56) References cited:
EP-A1- 3 715 417        EP-B1- 0 787 755
WO-A1-2014/171494        JP-A- 2016 148 056
JP-A- 2019 163 378        JP-A- 2019 163 378
JP-A- H03 175 033        JP-A- H11 323 189

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 29/04, C08L 29/04;**
**C08L 29/04, C08L 29/04, C08K 3/22;**
C08F 216/06, C08F 210/02

**Description**

TECHNICAL FIELD

The present disclosure relates to an ethylene-vinyl alcohol copolymer composition, a melt-forming material, a multilayer structure, a thermoformed container, a method for producing an ethylene-vinyl alcohol copolymer composition, and a method for producing a multilayer structure.

BACKGROUND ART

An ethylene-vinyl alcohol copolymer (which hereinafter may be referred to as "EVOH resin") is excellent in transparency, oxygen and other gas barrier properties, aroma retention, solvent resistance, oil resistance, mechanical strength, and the like, and is formed into films, sheets, bottles, and the like and widely used as various packaging materials, such as food, pharmaceutical products, industrial chemicals, and agricultural chemicals packaging materials.

The EVOH resin tends to have higher stretchability as the ethylene structural unit content (hereinafter referred to as "ethylene content") increases. On the other hand, as the ethylene content increases (as the vinyl alcohol structural unit content (hereinafter referred to as "vinyl alcohol content") decreases), the gas barrier properties decrease. In order to achieve both gas barrier properties and stretchability, it has been proposed to use a combination of an EVOH resin with a high vinyl alcohol content (in other words, a low ethylene content and a high degree of saponification) and an EVOH resin with a low vinyl alcohol content (in other words, a high ethylene content and a low degree of saponification).

For example, JP-A-S63-230757 discloses a composition including EVOH resins with different ethylene contents and different degrees of saponification in combination. According to JP-A-S63-230757, an EVOH resin composition in which the difference in ethylene content between two kinds of EVOH resins in combination is 4 mol% or more, the difference in degree of saponification is 3 mol% or more, and the difference in solubility parameter is more than a predetermined value is formed as an intermediate layer, which is laminated with a polystyrene layer. A molded article formed by vacuum pressure forming of the resulting laminate has excellent transparency and appearance, has no cracks or uneven thickness, and has excellent gas barrier properties. EP 3715417 A1 discloses thermoformable compositions that comprise two or more EVOH copolymers, having different ethylene structural unit contents, and a sorbic acid ester. The latter is included to improve the heat stability of the composition.

JP-A-H8-311276 discloses an EVOH resin composition containing two kinds of EVOH resins with an ethylene content difference of 3 to 20 mol% and having a particular boron concentration. It is disclosed that a laminate film having the EVOH resin composition as an intermediate layer and a polypropylene layer with an adhesive resin layer interposed therebetween is free from stretching unevenness such as whitening and streaks even when being heat-stretched (four times in the longitudinal direction and six times in the lateral direction).

In order to produce various molded articles using the above technologies, melt molding such as extrusion molding and injection molding is performed. However, the melt-molded EVOH resin compositions often suffer thermal degradation. In particular, in such a method using different EVOH resins, the EVOH resins having different melting points are melt-molded at a single temperature. Therefore, the EVOH resin with a lower melting point is likely to suffer thermal degradation, is inferior in thermal stability, and tends to be colored.

One of known methods to improve the coloring occurring when different EVOH resins are used is a technique using an EVOH resin in which the molecular weight measured after thermal treatment under a nitrogen atmosphere at 220°C for 50 hours satisfies a particular condition (for example, see JP-A-2016-29157).

SUMMARY

PROBLEMS TO BE SOLVED BY THE DISCLOSURE

In recent years, with diversified feedblock and die designs in molding apparatuses and with demands for increasing functionality such as thinner films and more layers of multilayer structures in end products, the molding apparatuses tend to be more sophisticated. On the other hand, in the complicated molding apparatus with increasing functionality, the resins tend to be thermally degraded and colored, leading to lower productivity (long-run workability) of the products.

The EVOH resin compositions disclosed in the above JP-AS63-230757, JP-A-H8-311276, and JP-A-2016-29157 are excellent in gas barrier properties and formability such as stretchability, but need further improvement in terms of the coloring change due to thermal degradation in the melt molding process.

In view of such a background, the present disclosure provides an EVOH resin composition having excellent long-run workability and allowing suppression of coloring change due to thermal degradation during melt molding.

MEANS FOR SOLVING THE PROBLEMS

In view of such a situation, the inventor of the present disclosure has found that an EVOH resin composition allowing suppression of the coloring change due to thermal degradation can be obtained by blending a particular minute amount of a titanium compound in an EVOH resin including two or more kinds of EVOH resins with different ethylene contents.

Specifically, the present disclosure has the following aspects.

[1] An EVOH resin composition comprising: an EVOH resin (A) including two or more kinds of EVOH resins with different ethylene structural unit contents; and a titanium compound (B), wherein the amount of the titanium compound (B) on a metal basis is 0.001 or more and less than 5 ppm per mass of the EVOH resin composition.

[2] The EVOH resin composition according to [1], wherein a difference in ethylene structural unit content between an EVOH resin with a highest ethylene structural unit content and an EVOH resin with a lowest ethylene structural unit content in the EVOH resin (A) is 2 mol% or more.

[3] The EVOH resin composition according to [1] or [2], wherein the EVOH resin (A) comprises an EVOH resin (A1) with an ethylene structural unit content of less than 35 mol% and an EVOH resin (A2) with an ethylene structural unit content of 35 mol% or more.

[4] The EVOH resin composition according to [3], wherein a mass blending ratio (A1/A2) of the EVOH resin (A1) with an ethylene structural unit content of less than 35 mol% to the EVOH resin (A2) with an ethylene structural unit content of 35 mol% or more is 1/99 to 99/1.

[5] A melt-forming material comprising the EVOH resin composition according to any one of [1] to [4].

[6] A multilayer structure comprising at least one layer comprising the EVOH resin composition according to any one of [1] to [4].

[7] A thermoformed container comprising the multilayer structure according to [6].

[8] A method for producing the EVOH resin composition according to any one of [1] to [4], the method comprising melt-mixing a composition raw material comprising the EVOH resin and a titanium compound.

[9] A method for producing the multilayer structure according to [6], the method comprising melt-molding a layer comprising the EVOH resin composition.

EFFECTS OF THE DISCLOSURE

The EVOH resin composition according to the present disclosure allows suppression of the coloring change due to thermal degradation during melt molding and has excellent long-run workability.

EMBODIMENTS OF THE DISCLOSURE

Hereinafter the present disclosure will be described more specifically based on exemplary embodiments of the present disclosure. However, the present disclosure is not limited to these embodiments.

In the present disclosure, the expression "X to Y" (X and Y are given numbers) is intended to encompass "preferably greater than X" or "preferably less than Y" unless otherwise specified, in addition to the meaning of "X or more and Y or less".

Further, the expression "X or more" (X is a given number) or "Y or less" (Y is a given number) is intended to encompass the meaning "preferably more than X" or "preferably less than Y".

<EVOH Resin Composition>

An EVOH resin composition according to an embodiment of the present disclosure (hereinafter referred to as "present EVOH resin composition") contains an EVOH resin (A) including two or more kinds of EVOH resins with different ethylene contents, as a main component, and a particular minute amount of a titanium compound (B).

Specifically, the present EVOH resin composition includes the EVOH resin (A) as a base resin. The content of the EVOH resin (A) in the present EVOH resin composition is typically 70% by mass or more, preferably 80% by mass or more, more preferably 90% by mass or more, and particularly preferably 95% by mass or more.

Each component will be described below.

[EVOH resin (A)]

The EVOH resin (A) used in the present disclosure includes two or more kinds of EVOH resins with different ethylene contents. The EVOH resin is a non-water-soluble thermoplastic resin obtained by saponifying an ethylene-vinyl ester copolymer which is a copolymer of ethylene and a vinyl ester monomer.

Typically, vinyl acetate is used as the vinyl ester monomer, in terms of commercial availability and high efficiency in impurity treatment during manufacture. Other examples of the vinyl ester monomer other than vinyl acetate include aliphatic vinyl esters such as vinyl formate, vinyl propionate, vinyl valerate, vinyl butyrate, vinyl isobutyrate, vinyl pivalate, vinyl caprate, vinyl laurate, vinyl stearate, and vinyl versatate, and aromatic vinyl esters such as vinyl benzoate. Typically, an aliphatic vinyl ester having 3 to 20 carbon atoms, preferably 4 to 10 carbon atoms, and particularly preferably 4 to 7 carbon atoms is used. Typically, these are used alone, but multiple kinds may be used at the same time.

The copolymerization of the ethylene and the vinyl ester monomer can be performed by any known polymerization method such as solution polymerization method, suspension polymerization method, or emulsion polymerization method. Typically, solution polymerization using methanol as a solvent is used. The saponification of the resulting ethylene-vinyl ester copolymer may be performed by a known method.

The thus produced EVOH resin mainly contains a structural unit derived from ethylene and a vinyl alcohol structural unit, and further contains a small amount of a vinyl ester structural unit left unsaponified.

The EVOH resin may further contain a structural unit derived from any of the following comonomers in a range that does not impair the effects of the present disclosure (for example, 10 mol% or less of the EVOH resin).

Examples of the comonomers include olefins such as propylene, 1-butene, and isobutene; hydroxyl-containing $\alpha$-olefins such as 3-buten-1-ol, 3-butene-1,2-diol, 4-penten-1-ol, and 5-hexene-1,2-diol, and derivatives including esterification products and acylation products of these hydroxyl-containing $\alpha$-olefins; hydroxyalkylvinylidenes such as 2-methylenepropane-1,3-diol and 3-methylenepentane-1,5-diol; hydroxyalkylvinylidene diacetates such as 1,3-diacetoxy-2-methylenepropane, 1,3-dipropionyloxy-2-methylenepropane, and 1,3-dibutyryloxy-2-methylenepropane; unsaturated acids such as acrylic acid, methacrylic acid, crotonic acid, phthalic acid (anhydride), maleic acid (anhydride), and itaconic acid (anhydride), salts of these acids, and mono- or dialkyl esters of these acids, the one or two alkyl groups each having 1 to 18 carbon atoms; acrylamide and analogues thereof such as N-alkylacrylamides in which the alkyl has 1 to 18 carbon atoms, N,N-dimethylacrylamide, 2-acrylamidopropanesulfonic acid and salts thereof, and acrylamidopropyldimethylamine and acid salts or quaternary salts thereof; methacrylamide and analogues thereof such as N-alkylmethacrylamides in which the alkyl has 1 to 18 carbon atoms, N,N-dimethylmethacrylamide, 2-methacrylamidopropanesulfonic acid and salts thereof, and methacrylamidopropyldimethylamine and acid salts or quaternary salts thereof; N-vinylamides such as N-vinylpyrrolidone, N-vinylformamide, and N-vinylacetamide; vinyl cyanide compounds such as acrylonitrile and methacrylonitrile; vinyl ethers such as alkyl vinyl ethers in which the alkyl has 1 to 18 carbon atoms, hydroxyalkyl vinyl ethers, and alkoxyalkyl vinyl ethers; halogenated vinyl compounds such as vinyl chloride, vinylidene chloride, vinyl fluoride, vinylidene fluoride, and vinyl bromide; vinyl silane compounds such as trimethoxyvinylsilane; halogenated allylated compounds such as allyl acetate and allyl chloride; allyl alcohol compounds such as allyl alcohol and dimethoxyallyl alcohol; trimethyl(3-acrylamido-3-dimethylpropyl)ammonium chloride, and acrylamido-2-methylpropanesulfonic acid. These can be used alone or in combination of two or more.

Among these, hydroxyl-containing $\alpha$-olefins are preferred. Especially, 3-butene-1,2-diol and 5-hexene-1,2-diol are preferred. When the hydroxyl-containing $\alpha$-olefins are copoymerized, the resulting EVOH resin has a primary hydroxyl group in a side chain. Such an EVOH resin having a primary hydroxyl group in a side chain, especially, an EVOH resin having a 1,2-diol structure in a side chain, is preferred in that secondary formability is good while maintaining gas barrier properties.

When the EVOH resin has a primary hydroxyl group in a side chain, the content of a structural unit derived from a monomer having the primary hydroxyl group is typically 0.1 to 20 mol% of the EVOH resin, preferably 0.5 to 15 mol%, particularly preferably 1 to 10 mol%.

Further, "post-modified" EVOH resins, such as esterified, urethanized, acetalized, cyanoethylated, and oxyalkylenated EVOH resins, may be used as the EVOH resin.

When the post-modified EVOH resin is used, the modification rate is typically 10 mol% or less, preferably 4 mol% or less. If the modification rate of the EVOH resin is too high, thermal degradation tends to occur and long-run workability tends to be reduced.

As previously mentioned, the EVOH resin (A) has two or more kinds of EVOH resins with different ethylene contents. As used herein the ethylene content of the EVOH resin means a value measured in conformity with ISO14663.

The ethylene content of the EVOH resin (A) is typically 20 to 60 mol%, preferably 25 to 50 mol%, and particularly preferably 25 to 45 mol%. If this content is too low, the gas barrier properties in high humidity and the melt moldability tend to be reduced in the applications for gas barrier properties. Conversely, if too high, the gas barrier properties tend to be reduced.

The difference in ethylene content between an EVOH resin with the highest ethylene content and an EVOH resin with the lowest ethylene content in the EVOH resin (A) is preferably 2 mol% or more, even more preferably 2 to 25 mol%, more preferably 4 to 20 mol%, and particularly preferably 5 to 18 mol%. If such a difference in ethylene content is too small, it tends to be difficult to maintain the balance between the formability and the gas barrier properties. If too large, the compatibility between these resins tends to be reduced.

The difference in ethylene content between two or more kinds of EVOH resins of the EVOH resin (A) can also be determined, for example, by measuring the melting peak temperatures. Specifically, the ethylene content of an EVOH resin usually correlates with the melting point of the EVOH resin, so the respective ethylene contents of two or more kinds of EVOH resins included in the EVOH resin (A) can be calculated by measuring the melting peak temperatures of the present EVOH resin composition.

The melting peak temperature means the temperature of the peak measured using a differential scanning calorimeter (DSC) by heating from -50 to 230°C at 10°C/min, cooling from 230 to -50°C at 10°C/min, and heating again from -50 to 230°C at 10°C/min.

The EVOH resin (A) has a melting peak temperature difference, as obtained by such DSC, of typically 3°C or more, preferably 3 to 40°C, more preferably 6 to 24°C, and particularly preferably 8 to 16°C. If such a temperature difference is too small, it tends to be difficult to maintain the balance between the formability and the gas barrier properties. If too large, the compatibility between these resins tends to be reduced.

The number of EVOH resins with different ethylene contents included in the EVOH resin (A) is typically 2 to 4, preferably 2 to 3, and particularly preferably 2. As the kinds of EVOH resins increase, productivity and cost efficiency tend to be reduced.

How many kinds of EVOH resins with different ethylene contents are included in the present EVOH resin composition can be determined from the number of peaks measured using the above DSC.

Further, it is preferable that the EVOH resin (A) at least includes an EVOH resin (A1) with an ethylene content of less than 35 mol% (hereinafter referred to as "EVOH resin (A1)") and an EVOH resin (A2) with an ethylene content of 35 mol% or more (hereinafter referred to as "EVOH resin (A2)"), in view of thermal stability.

The EVOH resin (A1) has an ethylene content of typically less than 35 mol%, preferably 20 to 34 mol%, more preferably 22 to 34 mol%, and particularly preferably 25 to 33 mol%. If the ethylene content is too low, the decomposition temperature and the melting point are too close to each other and the melt molding of the present EVOH resin composition tends to be difficult. Conversely, if too high, the effect of imparting gas barrier properties by the EVOH resin (A1) tends to be insufficient.

The EVOH resin (A2) has an ethylene content of typically 35 mol% or more, preferably 35 to 60 mol%, more preferably 36 to 56 mol%, and particularly preferably 37 to 45 mol%. If the ethylene content is too low, the effect of improving stretchability by the EVOH resin (A2) is small, and consequently, the secondary formability tends to be reduced. Conversely, if too high, it becomes necessary to select an EVOH resin with a high ethylene content as the other ethylene content in order to keep the difference in ethylene content within a predetermined range, and consequently, the gas barrier properties of the present EVOH resin composition layer become insufficient.

The degree of saponification of the EVOH resin (A) is typically 90 to 100 mol%, preferably 95 to 100 mol%, and particularly preferably 99 to 100 mol%. If the degree of saponification is too low, gas barrier properties, thermal stability, moisture resistance, and the like tend to be reduced.

The degree of saponification of the EVOH resin (A1) is typically 90 mol% or more, preferably 95 to 100 mol%, and particularly preferably 98 to 100 mol%. If the degree of saponification is too low, the effect of imparting gas barrier properties by the EVOH resin (A1) tends to be insufficient.

The degree of saponification of the EVOH resin (A2) is typically 90 mol% or more, preferably 93 to 100 mol%, and particularly preferably 98 to 100 mol%. If the degree of saponification is too low, the effect of imparting gas barrier properties by the EVOH resin (A2) tends to be insufficient.

It is noted that the degree of saponification is a value measured in conformity with JIS K 6726 (where a solution obtained by homogeneously dissolving EVOH in a water/methanol solvent is used).

The EVOH resin (A) has a melt flow rate (MFR) (at 210°C with a load of 2160 g) of typically 0.5 to 100 g/10 minutes, preferably 1 to 50 g/10 minutes, and particularly preferably 2 to 35 g/10 minutes. If this MFR is too high, film formability tends to be unstable. If too low, viscosity becomes too high and melt extrusion tends to be difficult.

The EVOH resin (A1) has a melt flow rate (MFR) (at 210°C with a load of 2160 g) of typically 1 to 100 g/10 minutes, preferably 2 to 50 g/10 minutes, and particularly preferably 3 to 10 g/10 minutes. If this MFR is too high, the mechanical strength of molded articles tends to be reduced. If too low, extrusion processability tends to be reduced.

The EVOH resin (A2) has a melt flow rate (MFR) (at 210°C with a load of 2160 g) of typically 1 to 100 g/10 minutes, preferably 2 to 50 g/10 minutes, and particularly preferably 3 to 30 g/10 minutes. If this MFR is too high, the mechanical strength of molded articles tends to be reduced. If too low, extrusion processability tends to be reduced.

In a combination of the EVOH resin (A1) and the EVOH resin (A2), it is preferable to adjust the respective degrees of saponification and the like of the EVOH resins so that the difference (ΔMFR) in MFR (at 210°C with a load of 2160 g) is preferably 5 or less g/10 minutes, more preferably 1.5 or less g/10 minutes, so that the resin flowability is almost equal during melt molding.

The mass blending ratio of the EVOH resin (A1) to the EVOH resin (A2) [EVOH resin (A1)/EVOH resin (A2)] is typically 1/99 to 99/1, preferably 10/90 to 90/10, more preferably 50/50 to 90/10, particularly preferably 60/40 to 88/12, and especially preferably 70/30 to 85/15. If the ratio of the EVOH resin (A1) is too small, gas barrier properties tend to be insufficient. If too large, the stretchability improving effect tends to be reduced.

[Titanium Compound (B)]

Examples of the titanium compound (B) include inorganic titanium compounds and organic titanium compounds. The titanium compounds may be used alone or in combination of two or more. Among these, inorganic titanium compounds are preferred.

Examples of the inorganic titanium compounds include titanium oxides, titanium hydroxides, titanium chlorides, and inorganic salts of titanium.

Examples of the titanium oxides include titanium(II) oxide, titanium(III) oxide, titanium(IV) oxide, and titanium suboxide.

Examples of the titanium hydroxides include titanous hydroxide and titanic hydroxide.

Examples of the titanium chlorides include titanous chloride and titanic chloride.

Examples of the inorganic salts of titanium include titanium phosphate and titanium sulfate.

Among these, titanium oxides are preferred, titanium(IV) oxide is more preferred, and rutile titanium(IV) oxide is particularly preferred.

Examples of the organic titanium compounds include titanium carboxylates such as titanium acetate, titanium butyrate, and titanium stearate.

It is noted that the titanium compound (B) may be present as a titanium compound in the present EVOH resin composition, or may be present in an ionized form or in a complex form interacting with the EVOH resin or other ligands.

The titanium compound (B) has an average particle diameter of typically 0.001 to 100 $\mu$m, preferably 0.01 to 50 $\mu$m, and more preferably 0.015 to 20 $\mu$m. When the average particle diameter of the titanium compound is within the above range, the coloring suppressing effect tends to be excellent.

The amount of the titanium compound (B) on a metal basis is 0.001 ppm or more and less than 5 ppm per mass of the EVOH resin composition. The amount of the titanium compound (B) on a metal basis is preferably 0.01 to 3 ppm, more preferably 0.03 to 1 ppm, and particularly preferably 0.05 to 0.5 ppm. When the amount of the titanium compound (B) is within the above range, the coloring change due to thermal degradation during melt molding can be suppressed, resulting in excellent long-run workability. If the amount of the titanium compound (B) is too small, the effect of suppressing the coloring change is reduced. If too large, thermal decomposition of the EVOH resin easily occurs to cause coloring.

The amount of the titanium compound on a metal basis can be determined by ICP mass spectrometry, in which the present EVOH resin composition is weighed into a platinum crucible and ashed sequentially in a burner and an electric furnace, the ash is decomposed by heating with nitric acid and hydrofluoric acid and then treated with a mixture of dilute nitric acid and dilute hydrofluoric acid, and titanium in a certain volume of the resulting solution is measured using an ICP mass spectrometer (Agilent 8800 from Agilent Technologies).

In general, the coloring of EVOH resins is caused by thermal degradation. This is presumably because heat degrades the EVOH resin to produce a radical, the radical causes dehydration of the hydroxyl group in the EVOH resin to generate a double bond in the main chain of the EVOH, and this site serves as a reaction starting point to further promote dehydration, resulting in a conjugated polyene structure in the main chain of the EVOH resin.

By contrast, since the present EVOH resin composition contains a particular minute amount of titanium compound, the coloring change of the EVOH resin due to thermal degradation is suppressed, and the long-run workability is excellent. Usually, when an EVOH resin composition contains a titanium compound, the EVOH resin composition may be colored because of titanium ions. It is therefore common in the art that those skilled in the art would avoid the use of a titanium compound. However, in the present disclosure, to the contrary of such common knowledge, it has been found that the use of a particular minute amount of titanium compound results in an EVOH resin composition allowing suppression of the coloring change due to thermal degradation.

More specifically, titanium is stable as a tetravalent ion and, even in a minute amount, coordinates to the double bond in the main chain of the EVOH resin as described above to be chelated and stabilized. Presumably, this suppresses the formation of a polyene structure.

On the other hand, if the amount of the titanium compound is too large, thermal decomposition of the EVOH resin due to the titanium compound may occur to cause coloring.

[Other Thermoplastic Resins]

The present EVOH resin composition can contain a thermoplastic resin(s) other than EVOH resins in a range that does not impair the effects of the present disclosure (for example, typically 30% by mass or less, preferably 20% by mass or less, particularly preferably 10% by mass or less of the present EVOH resin composition).

Known thermoplastic resins can be used as other thermoplastic resin(s). Examples include polyester resins, polystyrene resins, polyvinyl chloride resins, polycarbonate resins, ionomers, polyvinylidene chlorides, polyester elastomers, polyurethane elastomers, chlorinated polyethylenes, and chlorinated polypropylenes. These can be used alone or in combination of two or more.

[Other Additives]

The present EVOH resin composition may contain additives that are typically blended with EVOH resins in a range that does not impair the effects of the present disclosure. Examples of the additives that can be blended include inorganic double salts (e.g., hydrotalcite), plasticizers (e.g., aliphatic polyhydric alcohols such as ethylene glycol, glycerin, and hexanediol), oxygen absorbers [e.g., inorganic oxygen absorbers such as aluminum powder and potassium sulfite; ascorbic acid, and fatty acid esters and metal salts thereof, polyvalent phenols such as gallic acid and hydroxyl-containing phenolic aldehyde resins, terpene compounds, blends of tertiary hydrogencontaining resins and transition metals (e.g. combination of polypropylene and cobalt), blends of carbon-carbon unsaturated bond-containing resins and transition metals (e.g. combination of polybutadiene and cobalt), photo-oxidative degradable resins (e.g. polyketone), anthraquinone polymers (e.g. polyvinylanthraquinone), and polymer oxygen absorbers obtained by adding photoinitiators (e.g. benzophenone), other antioxidants, and deodorants (e.g. activated carbon) to these blends], heat stabilizers, photostabilizers, UV absorbers, colorants, antistatic agents, surfactants (except those used as lubricants), antimicrobial agents, antiblocking agents, and fillers (e.g. inorganic fillers). These compounds can be used alone or in combination of two or more.

[Method for Producing EVOH Resin Composition]

The present EVOH resin composition can be produced, for example, by mixing the EVOH resin (A) and the titanium compound (B) by any known method, for example, dry blending method, melt mixing method, solution mixing method, or impregnation method. Among these, it is preferable that the present EVOH resin composition is produced by a method including a step of melt-mixing a composition raw material containing the EVOH resin and the titanium compound. These production methods may be combined as appropriate.
An example of the dry blending method is a method (i) in which pellets of a single kind of EVOH resin that constitutes the EVOH resin (A) or pellets of the EVOH resin (A) and the titanium compound (B) are dry-blended by using a tumbler or the like.
Examples of the melt mixing method include a method (ii) in which pellets of a single kind of EVOH resin that constitutes the EVOH resin (A) or pellets of the EVOH resin (A) and the titanium compound (B) are dry-blended and the resulting dry blend is melt-kneaded, and a method (iii) in which the titanium compound (B) is added to and melt-kneaded with a single kind of EVOH resin in a molten state that constitutes the EVOH resin (A) or the EVOH resin (A) in a molten state.
Examples of the solution mixing method include a method (iv) in which the titanium compound (B) is added to a solution prepared by using pellets of a single kind of EVOH resin that constitutes the EVOH resin (A) or pellets of the EVOH resin (A), and the resulting solution is solidified, and then the solids are separated from liquid by known means and dried, and a method (v) in which the titanium compound (B) is added to an ethylene-vinyl ester copolymer solution before saponification or a homogeneous solution (water/alcohol solution or the like) of the EVOH resin in the production process of the EVOH resin, and the resulting solution is solidified, and then the solids are separated from liquid by known means and dried.
An example of the impregnation method is a method (vi) in which pellets of a single kind of EVOH resin that constitutes the EVOH resin (A) or pellets of the EVOH resin (A) are brought into contact with an aqueous solution containing the titanium compound (B) so that the titanium compound (B) is incorporated into the EVOH resin or the EVOH resin (A), and then the resulting pellets are dried.
As the aqueous solution containing the titanium compound (B), an aqueous solution of the titanium compound (B) or an elution of titanium ions obtained by immersing the titanium compound (B) in water containing various chemicals can be used.
In the impregnation method, the amount of the titanium compound (B) (on a metal basis) can be controlled by the concentration of the titanium compound (B) in the aqueous solution in which the EVOH resin or the EVOH resin (A) is immersed, the immersion temperature, the immersion time, and the like.
The immersion time is typically 0.5 to 48 hours, preferably 1 to 36 hours, and the immersion temperature is typically 10 to 40°C, preferably 20 to 35°C.
Various drying methods can be employed as the drying method in the above production methods. Either stationary drying or fluidized drying can be employed. These may be combined.
As previously mentioned, in the present disclosure, the above different methods can be combined. Among these, the melt mixing method is preferred, and especially the method (ii) is preferred, in terms of productivity and obtaining a resin composition with more significant effects of the present disclosure. When EVOH resins with different ethylene contents are mixed, the EVOH resins can be mixed by the dry blending method, the melt kneading method, the solution mixing method, or the like. Further, when the other thermoplastic resin(s) and other additives are used, they can be blended by an ordinary method in accordance with the above production method.

The present EVOH resin composition thus obtained by the above production methods can have any shape but preferably are pellets.

The pellets may each have, for example, a spherical shape, oval shape, cylindrical shape, cubic shape, square prism shape, or the like. Typically the pellets have the oval shape or the cylindrical shape. The oval pellets each have a minor diameter of typically 1 to 10 mm, preferably 2 to 6 mm, and even more preferably 2.5 to 5.5 mm, and a major diameter of typically 1.5 to 30 mm, preferably 3 to 20 mm, and even more preferably 3.5 to 10 mm in view of convenience when the pellets are used as a molding material later. The cylindrical pellets each have a bottom diameter of typically 1 to 6 mm, preferably 2 to 5 mm, and a length of typically 1 to 6 mm, preferably 2 to 5 mm.

It is preferable that the pellets of the EVOH resin used in the above production methods have similar shape and size.

Even when the present EVOH resin composition is heated during melt molding, the coloring change is suppressed and the long-run workability is excellent. The ratio of the YI (yellowness index) value after heating to the YI value before heating (YI value after heating /YI value before heating) is typically 6.4 or less, preferably 6.2 or less, and particularly preferably 5.9 or less. When the ratio of the YI value after heating to the YI value before heating is within the above range, the coloring change tends to be more suppressed. It is noted that the lower limit of the ratio of the YI value after heating to the YI value before heating is typically 1.

The YI value before heating can be obtained by measuring the present EVOH resin composition pulverized into a 1 to 5 mm square and fully filled in a cylinder with an inner diameter of 32 mm and a height of 30 mm, by using a spectrocolorimeter SE6000 (from NIPPON DENSHOKU INDUSTRIES CO., LTD.).

The YI value after heating can be obtained by measuring the present EVOH resin composition pulverized into a 1 to 5 mm square and heated in an oven under the air atmosphere at 150°C for five hours, in the same manner as described above.

The present EVOH resin composition has a water content of typically 0.01 to 0.5% by mass, preferably 0.05 to 0.35% by mass, and particularly preferably 0.1 to 0.3% by mass.

The water content of the present EVOH resin composition is measured and calculated by the following method.

The mass before drying ($W_1$) of the present EVOH resin composition is measured by an electronic balance, and then the present EVOH resin composition is dried at 150°C for five hours in a hot air dryer and cooled for 30 minutes in a desiccator. The mass after cooling ($W_2$) is measured, and the water content is calculated by the following expression.

$$\text{Water content (\% by mass)} = [(W_1 - W_2)/W_1] \times 100$$

Further, when the present EVOH resin composition is in the pellet shape, it is preferable to attach a known lubricant to the surfaces of the pellets in order to stabilize the feedability during melt molding. Examples of the lubricant include higher fatty acids having 12 or more carbon atoms (e.g. lauric acid, myristic acid, palmitic acid, stearic acid, behenic acid, oleic acid, etc.), higher fatty acid esters (methyl esters, isopropyl esters, butyl esters, octyl esters, etc. of higher fatty acids), higher fatty acid amides (e.g. saturated higher fatty acid amides such as lauric acid amide, myristic acid amide, palmitic acid amide, stearic acid amide, and behenic acid amide; unsaturated higher fatty acid amides such as oleamide and erucamide, and bis-higher fatty acid amides such as ethylenebisstearamide, ethylenebisoleamide, ethylenebiserucamide, and ethylenebislauramide), low molecular weight polyolefins (e.g. low molecular weight polyethylene with a molecular weight of about 500 to 10000, or low molecular weight polypropylene, or acid modified products thereof), higher alcohols with 6 or more carbon atoms, ester oligomers, and ethylene fluoride resins. These compounds can be used alone or in combination of two or more. The lubricant content is typically 5% by mass or less of the present EVOH resin composition, preferably 1% by mass or less. The lower limit is typically 0% by mass.

The thus obtained present EVOH resin composition is prepared in various forms such as pellets, powder, and liquid and provided as a molding material for various molded articles. In particular, in the present disclosure, it is preferable that the present EVOH resin composition is provided as a material for melt molding, because if so, the effects of the present disclosure can be achieved more efficiently.

It is noted that the present EVOH resin composition includes a resin composition obtained by mixing a resin other than the EVOH resins used in the present EVOH resin composition.

Examples of the molded article include a monolayer film molded from the present EVOH resin composition and a multilayer structure having a layer made of the present EVOH resin composition.

[Multilayer Structure]

A multilayer structure according to an embodiment of the present disclosure (hereinafter referred to as "the present multilayer structure") includes a layer made of the present EVOH resin composition. A layer made of the present EVOH resin composition (hereinafter simply referred to as "present EVOH resin composition layer") can be laminated with other base material(s) mainly composed of a thermoplastic resin other than the present EVOH resin composition (hereinafter the resin used in the base material may be shortly referred to as "base material resin") to impart additional strength, protect the present EVOH resin composition layer from moisture or other effects, and impart another function.

Examples of the base material resin include (unmodified) polyolefin resins including polyethylene resins such as linear low-density polyethylenes, low-density polyethylenes, very-low-density polyethylenes, medium-density polyethylenes, high-density polyethylenes, ethylene-propylene (block and random) copolymers, and ethylene-$\alpha$-olefin ($\alpha$-olefin having 4 to 20 carbon atoms) copolymers, polypropylene resins such as polypropylenes and propylene-$\alpha$-olefin ($\alpha$-olefin having 4 to 20 carbon atoms) copolymers, polybutenes, polypentenes, and polycycloolefin resins (polymers having a cycloolefin structure in a main chain and/or a side chain thereof), polyolefin resins in a broader sense including modified olefin resins such as unsaturated carboxyl-modified polyolefin resins obtained by graft-modifying any of the aforementioned polyolefin resins with an unsaturated carboxylic acid or an unsaturated carboxylic acid ester, ionomers, ethylene-vinyl acetate copolymers, ethylene-acrylic acid copolymers, ethylene-acrylate copolymers, polyester resins, polyamide resins (including polyamide copolymers), polyvinyl chlorides, polyvinylidene chlorides, acrylic resins, polystyrene resins, vinyl ester resins, polyester elastomers, polyurethane elastomers, polystyrene elastomers, halogenated polyolefins such as chlorinated polyethylenes and chlorinated polypropylenes, and aromatic and aliphatic polyketones. These can be used alone or in combination of two or more.

Among these, the polyamide resins, the polyolefin resins, the polyester resins, and the polystyrene resins, which are hydrophobic resins, are preferred. The polyolefin resins such as the polyethylene resins, the polypropylene resins, the polycycloolefin resins, and the unsaturated carboxyl-modified polyolefin resins obtained by modifying these polyolefin resins are more preferred.

When the present EVOH resin composition layer is "a" (a1, a2, ...) and the base material resin layer is "b" (b1, b2, ...), the layered configuration of the present multilayer structure may be any combination, such as a/b, b/a/b, a/b/a, a1/a2/b, a/b1/b2, b2/b1/a/b1/b2, or b2/b1/a/b1/a/b1/b2. When the present multilayer structure includes a recycle layer R containing a mixture of the present EVOH resin composition and a thermoplastic resin(s) other than the present EVOH resin composition, which is obtained by re-melt-molding discards or defectives occurring in the process of producing the present multilayer structure, the layered configuration may be a combination such as b/R/a, b/R/a/b, b/R/a/R/b, b/a/R/a/b, or b/R/a/R/a/R/b. The total number of layers in the present multilayer structure is typically 2 to 15, preferably 3 to 10. In the above layered configurations, an adhesive resin layer containing an adhesive resin may be interposed between individual layers, if necessary.

A known adhesive resin can be used as the adhesive resin. The adhesive resin can be selected as appropriate depending on the kind of thermoplastic resin used in the base material resin layer "b". Typical examples include carboxyl-containing modified polyolefin polymers obtained by chemically bonding an unsaturated carboxylic acid or anhydride thereof to a polyolefin resin by addition reaction, graft reaction, or the like. Examples of the carboxyl-containing modified polyolefin polymers include polyethylenes graft-modified with maleic anhydride, polypropylenes graft-modified with maleic anhydride, ethylene-propylene (block and random) copolymers graft-modified with maleic anhydride, ethylene-ethyl acrylate copolymers graft-modified with maleic anhydride, ethylene-vinyl acetate copolymers graft-modified with maleic anhydride, polycycloolefin resins modified with maleic anhydride, and polyolefin resins graft-modified with maleic anhydride. These may be used alone or in combination of two or more.

In the present multilayer structure, when the adhesive resin layer is used between the present EVOH resin composition layer and the base material resin layer, it is preferable to use an adhesive resin having excellent hydrophobicity, because the adhesive resin layer is situated on both sides of the present EVOH resin composition layer.

The base material resin and the adhesive resin may contain plasticizer, filler, clay (such as montmorillonite), colorant, antioxidant, antistatic agent, lubricant, nucleating agent, antiblocking agent, wax, and the like as conventionally known, in a range that does not impair the spirit of the present disclosure (for example, 30% by mass or less, preferably 10% by mass or less of the entire resin). These can be used alone or in combination of two or more.

The lamination of the present EVOH resin composition layer and the base material resin layer (including the case where the adhesive resin layer is interposed) can be performed by a known method. Examples of the laminating method include: a method in which a film or a sheet of the present EVOH resin composition is laminated with the base material resin by melt extrusion; a method in which the base material resin layer is laminated with the present EVOH resin composition by melt extrusion; a method in which the present EVOH resin composition and the base material resin are co-extruded; a method in which the present EVOH resin composition (layer) and the base material resin (layer) are dry-laminated using a known adhesive agent such as organic titanium compound, isocyanate compound, polyester compound, or polyurethane compound; and a method in which a solution of the present EVOH resin composition is applied on the base material resin, and then the solvent is removed. Among these methods, in consideration of cost and environment, a method including a step of melt-molding the present EVOH resin composition layer is preferred. Specifically, coextrusion is preferred.

Since the present EVOH resin composition has thermoformability, the present multilayer structure can be suitably used for thermoforming such as stretching process and drawing process. The present EVOH resin composition and the present multilayer structure are preferred as materials for producing thermoformed containers such as cups, trays, tubes, and bottles by such thermoforming.

The present multilayer structure may undergo a (heat) stretching process, if necessary. The stretching process may be either uniaxial stretching or biaxial stretching. The biaxial stretching may be either simultaneous stretching or sequential stretching. As a stretching method, a method with a high stretch ratio can be employed among roll stretching, tenter stretching, tubular stretching, stretch blow, and vacuum pressure forming methods. The stretching temperature is selected from a range of about typically 40 to 170°C, preferably 60 to 160°C, which is a temperature near the melting point of the multilayer structure. If the stretching temperature is too low, the stretchability is poor. If too high, it is difficult to maintain a stable stretch state.

Further, the present multilayer structure after the stretching process may be subjected to heat setting for the purpose of imparting dimension stability. The heat setting can be performed by known means. For example, the stretched present multilayer structure is subjected to thermal treatment with a tension state being kept, typically at 80 to 180°C, preferably 100 to 165°C, typically for about 2 to 600 seconds.

When the stretched present multilayer structure is used as a shrinkable film, for example, a cold-setting process for imparting a heat-shrinkable property may be performed by applying cold air to the stretched present multilayer structure, without performing the heat setting.

The thickness of the present multilayer structure (including the stretched multilayer structure) and the thicknesses of the present EVOH resin composition layer, the base material resin layer, and the adhesive resin layer that constitute the multilayer structure may vary with the layered configuration, the kind of base material resin, the kind of adhesive resin, intended use, packaging form, required physical properties, and the like, but the thickness of the present multilayer structure (including the stretched multilayer structure) is typically 10 to 5000 $\mu$m, preferably 30 to 3000 $\mu$m, and particularly preferably 50 to 2000 $\mu$m. The thickness of the present EVOH resin composition layer is typically 1 to 500 $\mu$m, preferably 3 to 300 $\mu$m, and particularly preferably 5 to 200 $\mu$m. The thickness of the base material resin layer is typically 5 to 3000 $\mu$m, preferably 10 to 2000 $\mu$m, and particularly preferably 20 to 1000 $\mu$m. The thickness of the adhesive resin layer is typically 0.5 to 250 $\mu$m, preferably 1 to 150 $\mu$m, and particularly preferably 3 to 100 $\mu$m.

Further, the thickness ratio of the present EVOH resin composition layer to the base material resin layer in the present multilayer structure (present EVOH resin composition layer/base material resin layer) is typically 1/99 to 50/50, preferably 5/95 to 45/55, and particularly preferably 10/90 to 40/60, where if these layers each include a plurality of layers, the thickness ratio is the ratio between the thickest one of the present EVOH resin composition layers and the thickest one of the base material resin layers. Further, the thickness ratio of the present EVOH resin composition layer to the adhesive resin layer in the present multilayer structure (present EVOH resin composition layer/adhesive resin layer) is typically 10/90 to 99/1, preferably 20/80 to 95/5, and particularly preferably 50/50 to 90/10, where if these layers each include a plurality of layers, the thickness ratio is the ratio between the thickest one of the present EVOH resin composition layers and the thickest one of the adhesive resin layers.

A cup or tray-shaped multilayer container may be produced from the present multilayer structure. In this case, a drawing process is typically employed. Specific examples include a vacuum forming method, pressure forming method, vacuum pressure forming method, and plug-assisted vacuum pressure forming method. When a tube or bottle-shaped multilayer container (laminate structure) is produced from a multilayer parison (a hollow tubular preform before blowing), a blow molding process is employed. Specific examples include an extrusion blow molding method (twin head type, mold shift type, parison shift type, rotary type, accumulator type, horizontal parison type, etc.), cold parison blow molding method, injection blow molding method, and biaxial stretching blow molding method (extrusion type cold parison biaxial stretching blow molding method, injection type cold parison biaxial stretching blow molding method, injection inline type biaxial stretching blow molding method, etc.). The resulting laminate may be subjected to a heating process, cooling process, rolling process, printing process, dry laminating process, solution or melt coating process, bag forming process, deep drawing process, box forming process, tube forming process, splitting process, or the like, if necessary.

Monolayer films produced from the present EVOH resin composition, and bags, cups, trays, tubes, bottles, and other containers, and caps produced from the present multilayer structure are useful as various packaging material containers for general foods, condiments such as mayonnaise and dressing, fermented foods such as miso, fat and oil foods such as salad oil, beverages, cosmetics, and pharmaceutical products. In particular, since the present multilayer structure has thermoformability and has coloring suppressed, the present multilayer structure is suitable especially for thermoformed containers for foods, chemicals, and agricultural chemicals.

EXAMPLES

Hereinafter, the present disclosure will be described more specifically with reference to examples. However, the present disclosure is not limited to the following examples.

In the examples, "parts" means parts on a mass basis unless otherwise specified.

<Example 1>

Pellets of an EVOH resin with an ethylene content of 29 mol%, a degree of saponification of 99.6 mol%, and a MFR of 4 g/10 minutes (at 210°C with a load of 2160 g) were used as the EVOH resin (A1), and pellets of an EVO resin with an ethylene content of 44 mol%, a degree of saponification of 99.6 mol%, and a MFR of 4 g/10 minutes (at 210°C with a load of 2160 g) were used as the EVOH resin (A2).

Titanium oxide (from FUJIFILM Wako Pure Chemical Corporation) was used as the titanium compound.

A mixture was prepared by dry-blending 80 parts of the pellets of the EVOH resin (A1), 20 parts of the pellets of the EVOH resin (A2), and the titanium oxide in the amount of 0.1 ppm on a metal basis per mass of the EVOH resin composition.

The mixture was fed to a twin-screw extruder (20 mm in diameter) with a two-hole die, and a strand extruded and ejected under the following extrusion conditions was cooled by air and solidified on a conveyor belt. Then, the solidified strand was cut to produce pellets of an EVOH resin composition.

[Extrusion Conditions]

$$\text{Extruder setting temperature (°C): C1/C2/C3/C4/C5/C6}$$

$$= 150/200/210/210/210/210$$

<Example 2>

Pellets of an EVOH resin composition was obtained in the same way as in Example 1 except that the amount of titanium oxide on a metal basis was changed to 1 ppm per mass of the EVOH resin composition in Example 1.

<Comparative Example 1>

Pellets of an EVOH resin composition was obtained in the same way as in Example 1 except that titanium oxide was not used in Example 1.

<Comparative Example 2>

Pellets of an EVOH resin composition was obtained in the same way as in Example 1 except that the amount of titanium oxide on a metal basis was changed to 10 ppm per mass of the EVOH resin composition in Example 1.

The resulting pellets of the EVOH resin compositions in Examples 1 and 2 and Comparative Examples 1 and 2 were evaluated for long-run workability as described below. The results are listed in Table 1 below.

[Long-Run Workability Evaluation]

The resulting pellets of the EVOH resin compositions were pulverized by a pulverizer (SKR16-240 from Sometani Sangyo Company Limited.) at 650 rpm into pulverized pellets of a 1 to 5 mm square.

The resulting pulverized pellets were fully filled into a cylinder with an inner diameter of 32 mm and a height of 30 mm. In this state, the YI value was measured by using a spectrocolorimeter SE6000 (from NIPPON DENSHOKU INDUSTRIES CO., LTD.).

In addition, the YI value of the pulverized pellets heated in an oven at 150°C for five hours was measured similarly.

Thereafter, the ratio of the YI value after heating to the YI value before heating was calculated.

A larger ratio of the YI value after heating to the YI value before heating indicates that the EVOH resin composition has changed in color to be yellowish.

Table 1

| | EVOH resin | | Amount of titanium compound on metal basis (ppm) | Long-run workability |
| --- | --- | --- | --- | --- |
| | EVOH resin (A1) (parts) | EVOH resin (A2) (parts) | | YI value ratio (after heating/before heating) |
| Example 1 | 80 | 20 | 0.1 | 5.9 |
| Example 2 | 80 | 20 | 1 | 6.0 |
| Comparative Example 1 | 80 | 20 | 0 | 6.8 |
| Comparative Example 2 | 80 | 20 | 10 | 6.5 |

Table 1 indicates that, compared to the EVOH resin composition containing no titanium compound in Comparative Example 1 and the EVOH resin composition containing a titanium compound in an amount that exceeds a particular range in Comparative Example 2, the EVOH resin compositions containing a particular minute amount of titanium compound in Examples 1 and 2 have a smaller YI value ratio, which means that the coloring change by heating is suppressed and therefore long-run workability is excellent. Further, multilayer structures and thermoformed containers having layers of the EVOH resin compositions of Examples 1 and 2 also have coloring change suppressed and have excellent long-run workability.

While specific forms of the embodiments of the present disclosure have been shown in the above examples, the examples are merely illustrative but not limitative. It is contemplated that various modifications apparent to those skilled in the art could be made within the scope of the present disclosure.

INDUSTRIAL APPLICABILITY

The present EVOH resin composition allows suppression of the coloring change due to thermal degradation during melt molding and has excellent long-run workability, and therefore is useful as various packaging materials for various foods, condiments such as mayonnaise and dressing, fermented foods such as miso, fat and oil foods such as salad oil, beverages, cosmetics, and pharmaceutical products.

**Claims**

1. An ethylene-vinyl alcohol copolymer composition comprising: an ethylene-vinyl alcohol copolymer (A) comprising two or more kinds of ethylene-vinyl alcohol copolymers with different ethylene structural unit contents; and a titanium compound (B), wherein the amount of the titanium compound (B) on a metal basis is 0.001 or more and less than 5 ppm per mass of the ethylene-vinyl alcohol copolymer composition.

2. The ethylene-vinyl alcohol copolymer composition according to claim 1, wherein a difference in ethylene structural unit content between an ethylene-vinyl alcohol copolymer with a highest ethylene structural unit content and an ethylene-vinyl alcohol copolymer with a lowest ethylene structural unit content in the ethylene-vinyl alcohol copolymer (A) is 2 mol% or more.

3. The ethylene-vinyl alcohol copolymer composition according to claim 1 or 2, wherein the ethylene-vinyl alcohol copolymer (A) comprises an ethylene-vinyl alcohol copolymer (A1) with an ethylene structural unit content of less than 35 mol% and an ethylene-vinyl alcohol copolymer (A2) with an ethylene structural unit content of 35 mol% or more.

4. The ethylene-vinyl alcohol copolymer composition according to claim 3, wherein a mass blending ratio (A1/A2) of the ethylene-vinyl alcohol copolymer (A1) with an ethylene structural unit content of less than 35 mol% to the ethylene-vinyl alcohol copolymer (A2) with an ethylene structural unit content of 35 mol% or more is 1/99 to 99/1.

5. A melt-forming material comprising the ethylene-vinyl alcohol copolymer composition according to any one of claims 1 to 4.

6. A multilayer structure comprising at least one layer comprising the ethylene-vinyl alcohol copolymer composition according to any one of claims 1 to 4.

7. A thermoformed container comprising the multilayer structure according to claim 6.

8. A method for producing the ethylene-vinyl alcohol copolymer composition according to any one of claims 1 to 4, the method comprising melt-mixing a composition raw material comprising the ethylene-vinyl alcohol copolymer and a titanium compound.

9. A method for producing the multilayer structure according to claim 6, the method comprising melt-molding a layer comprising the ethylene-vinyl alcohol copolymer composition.

**Patentansprüche**

1. Ethylen-Vinylalkohol-Copolymerzusammensetzung, umfassend: ein Ethylen-Vinylalkohol-Copolymer (A), umfassend zwei oder mehr Arten von Ethylen-Vinylalkohol-Copolymeren mit unterschiedlichem Gehalt an Ethylenstruktureinheiten, und eine Titanverbindung (B), wobei die Menge der Titanverbindung (B) auf Metallbasis 0,001 oder mehr und weniger als 5 Masse-ppm der Ethylen-Vinylalkohol-Copolymerzusammensetzung beträgt.

2. Ethylen-Vinylalkohol-Copolymerzusammensetzung gemäß Anspruch 1, wobei ein Unterschied im Gehalt der Ethylenstruktureinheiten zwischen einem Ethylen-Vinylalkohol-Copolymer mit einem höchsten Gehalt an Ethylenstruktureinheiten und einem Ethylen-Vinylalkohol-Copolymer mit einem niedrigsten Gehalt an Ethylenstruktureinheiten in dem Ethylen-Vinylalkohol-Copolymer (A) 2 mol-% oder mehr beträgt.

3. Ethylen-Vinylalkohol-Copolymerzusammensetzung gemäß Anspruch 1 oder 2, wobei das Ethylen-Vinylalkohol-Copolymer (A) ein Ethylen-Vinylalkohol-Copolymer (A1) mit einem Gehalt an Ethylenstruktureinheiten von weniger als 35 mol-% und ein Ethylen-Vinylalkohol-Copolymer (A2) mit einem Gehalt an Ethylenstruktureinheiten von 35 mol-% oder mehr umfasst.

4. Ethylen-Vinylalkohol-Copolymerzusammensetzung gemäß Anspruch 3, wobei ein Massenmischverhältnis (A1/A2) des Ethylen-Vinylalkohol-Copolymers (A1) mit einem Gehalt an Ethylenstruktureinheiten von weniger als 35 mol-% zu dem Ethylen-Vinylalkohol-Copolymer (A2) mit einem Gehalt an Ethylenstruktureinheiten von 35 mol-% oder mehr 1/99 bis 99/1 beträgt.

5. Schmelze bildendes Material, umfassend die Ethylen-Vinylalkohol-Copolymerzusammensetzung gemäß einem der Ansprüche 1 bis 4.

6. Mehrschichtstruktur, umfassend mindestens eine Schicht, umfassend die Ethylen-Vinylalkohol-Copolymerzusammensetzung gemäß einem der Ansprüche 1 bis 4.

7. Thermogeformter Behälter, umfassend die Mehrschichtstruktur gemäß Anspruch 6.

8. Verfahren zur Herstellung der Ethylen-Vinylalkohol-Copolymerzusammensetzung gemäß einem der Ansprüche 1 bis 4, wobei das Verfahren das Schmelzmischen eines Zusammensetzungsrohmaterials umfasst, das das Ethylen-Vinylalkohol-Copolymer und eine Titanverbindung umfasst.

9. Verfahren zur Herstellung der Mehrschichtstruktur gemäß Anspruch 6, wobei das Verfahren das Schmelzformen einer Schicht umfasst, die die Ethylen-Vinylalkohol-Copolymerzusammensetzung umfasst.

**Revendications**

1. Composition de copolymère d'éthylène-alcool vinylique comprenant :
un copolymère (A) d'éthylène-alcool vinylique comprenant au moins deux types de copolymères d'éthylène-alcool vinylique présentant des teneurs en unités constitutives d'éthylène différentes ; et un composé de titane (B), dans laquelle la quantité exprimée en termes de métal du composé de titane (B) est de 0,001 ou plus et inférieure à 5 ppm en masse de la composition de copolymère d'éthylène-alcool vinylique.

2. Composition de copolymère d'éthylène-alcool vinylique selon la revendication 1, dans laquelle une différence de teneur en unités constitutives d'éthylène entre un copolymère d'éthylène-alcool vinylique présentant une teneur en unités constitutives d'éthylène la plus élevée et un copolymère d'éthylène-alcool vinylique présentant une teneur en unités constitutives d'éthylène la plus basse dans le copolymère (A) d'éthylène-alcool vinylique est de 2 % en moles ou plus.

3. Composition de copolymère d'éthylène-alcool vinylique selon la revendication 1 ou la revendication 2, dans laquelle le copolymère (A) d'éthylène-alcool vinylique comprend un copolymère (A1) d'éthylène-alcool vinylique avec une teneur en unités constitutives d'éthylène inférieure à 35 % en moles et un copolymère (A2) d'éthylène-alcool vinylique avec une teneur en unités constitutives d'éthylène de 35 % en moles ou plus.

4. Composition de copolymère d'éthylène-alcool vinylique selon la revendication 3, dans laquelle un rapport massique de mélange (A1/A2) du copolymère (A1) d'éthylène-alcool vinylique avec une teneur en unités constitutives d'éthylène inférieure à 35 % en moles au copolymère (A2) d'éthylène-alcool vinylique avec une teneur en unités constitutives d'éthylène de 35 % en moles ou plus est de 1/99 à 99/1.

5. Matériau de formation à l'état fondu comprenant la composition de copolymère d'éthylène-alcool vinylique selon l'une quelconque des revendications 1 à 4.

6. Structure multicouche comprenant au moins une couche comprenant la composition de copolymère d'éthylène-alcool vinylique selon l'une quelconque des revendications 1 à 4.

7. Récipient thermoformé comprenant la structure multicouche selon la revendication 6.

8. Procédé de production de la composition de copolymère d'éthylène-alcool vinylique selon l'une quelconque des revendications 1 à 4, le procédé comprenant une étape consistant à mélanger à l'état fondu une matière première de composition comprenant le copolymère d'éthylène-alcool vinylique et un composé de titane.

9. Procédé de production de la structure multicouche selon la revendication 6, le procédé comprenant le moulage, à l'état fondu, d'une couche comprenant la composition de copolymère d'éthylène-alcool vinylique.

**EP 4 502 048 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S63230757 A
- EP 3715417 A1
- JP H8311276 A
- JP 2016029157 A